# EUROPÄISCHE PATENTSCHRIFT

(11) **EP 2 116 406 B1**
(45) Veröffentlichungstag und Bekanntmachung des Hinweises auf die Patenterteilung: **08.08.2018**
(21) Anmeldenummer: 09159792.2
(22) Anmeldetag: 08.05.2009
(51) Int. Cl.: B60K 15/03

(54) **Behälter für Betriebsstoffe und Verfahren zu dessen Herstellung**
Container for supplies and method for its manufacture
Récipient pour substances de fonctionnement et son procédé de fabrication

(30) Priorität: 09.05.2008 DE 102008023073; 16.06.2008 DE 102008028277
(43) Veröffentlichungstag der Anmeldung: 11.11.2009
(73) Patentinhaber: MAGNA STEYR Fuel Systems GmbH Werk Schwäbisch Gmünd, 73529 Schwäbisch Gmünd (DE)
(72) Erfinder: Koegel, Alexander, 89077, Ulm (DE)
(74) Vertreter: Rausch, Gabriele

(56) Entgegenhaltungen:
- EP-A1- 1 184 157
- DE-A1-102006 054 208

## Beschreibung

Die Erfindung betrifft einen Behälter für Betriebsstoffe von Kraftfahrzeugen, insbesondere von Nutzfahrzeugen, gemäß dem Oberbegriff von Anspruch 1.

Ein Behälter für Betriebsstoffe ist aus der WO 2007/080078 A1 bekannt.

Behälter für Betriebsstoffe von Kraftfahrzeugen bzw. Kraftstofftanks finden sich üblicherweise als Anbauteile bei Nutzfahrzeugen, wo sie als genietete oder geschweißte Metallbehälter, alternativ als Kunststoffbehälter ausgebildet sind.

Im Nutzfahrzeugbereich entstand in den letzten Jahren - bedingt durch wachsende Anforderungen an die Umweltverträglichkeit derartiger Fahrzeuge - ein Bedarf an Behältern für Betriebsstoffe bzw. Betriebsstoffkomponenten, deren Funktion über die eines konventionellen Kraftstofftanks hinausgeht. So wurde es beispielsweise in jüngster Zeit erforderlich, im Rahmen der Maßnahmen zur Entstickung von Dieselabgasen Harnstoff bzw. ADBLUE im Abgassystem von Nutzfahrzeugen einzusetzen. Damit entstand ein Bedarf an entsprechenden Behältern, die zum Mitführen des benötigten, chemisch aggressiven Harnstoffs bzw. ADBLUEs geeignet sind.

In der WO 2007/080078 A1 wird ein hierzu geeigneter Behälter und ein Verfahren zu dessen Herstellung beschrieben. Vorgesehen ist dabei, dass der Behälter eine (übliche) Tragstruktur aus Metall aufweist und die Innenseite der Tragstruktur mindestens teilweise mit einer Kunststoff-Sinterschicht bedeckt ist. Vorzugsweise ist dabei die Tragstruktur aus einem vergleichsweise steifen Material, wie beispielsweise einem Metall, gefertigt, auf der die dünne Kunststoff-Sinterschicht aufgebracht ist. Die Kunststoff-Sinterschicht kann vorzugsweise dadurch geschaffen werden, dass nach der Ausformung der Tragstruktur der Behälter insgesamt erhitzt wird und nachfolgend ein Kunststoffpulver in seinen Innenraum eingebracht wird, wo es an der heißen Tragstruktur aufschmilzt und damit die Kunststoff-Sinterschicht bildet.

Der Vorteil der WO 2007/080078 A1 besteht darin, dass aufgrund der durch die Wahl des Materials bedingten Steifigkeit der Tragstruktur diese dünn ausgebildet werden kann und auch die Kunststoff-Sinterschicht als Schicht von geringer Dicke ihre Funktion in ausreichendem Maße erfüllt.

Gegenüber anderen vorbekannten konventionellen Lösungen, bei denen ein fertiger Kunststoffbehälter in eine äußere stabilisierende Hülle eingebracht wird, hat die Lösung nach der WO 2007/080078 A1 den Vorteil, dass der Innenraum der äußeren Hülle, im vorliegenden Fall also der Innenraum der Tragstruktur des Behälters, wesentlich besser ausgenutzt werden kann. Insgesamt wird somit eine steife und gleichzeitig leichte Struktur erreicht.

Ein Vorteil der Kunststoffbeschichtung der Behälterinnenseite gemäß der WO 2007/080078 A1 besteht darin, dass die Kunststoffschicht üblicherweise chemisch inert ist, d. h. dass sie durch den im Behälter aufbewahrten Betriebsstoff nicht angegriffen wird. Damit wird dem verbreiteten Problem des Auslösens von Metall, insbesondere von Aluminiumionen, aus der Tragstruktur des Behälters durch den teilweise aggressiven Betriebsstoff, wie beispielsweise Harnstoff oder ADBLUE, wirkungsvoll begegnet. Ein gattungsgemäßer Behälter für Betriebsstoffe ist aus der DE 10 2006 054208 A1 bekannt. Der vorliegenden Erfindung liegt die Aufgabe zugrunde, die bekannten Behälter zur Aufnahme von Betriebsstoffen, insbesondere den Behälter gemäß der WO 2007/080078 A1, weiter zu verbessern, insbesondere die Nutzung des Innenraums des Behälters weiter zu optimieren und das Gewicht des Behälters zu reduzieren.

Diese Aufgabe wird erfindungsgemäß durch einen Behälter gemäß dem Anspruch 1 gelöst, wobei die Kunststoff-Sinterschicht aus einem Polyurethan oder einem Polyamid oder einem Polypropylen gebildet ist.

Ein Verfahren zum Herstellen eines Behälters zur Aufnahme von Betriebsstoffen ergibt sich aus Anspruch 12.

Die Erfinder haben herausgefunden, dass sich Polyurethan oder Polyamid (PA) oder Polypropylen (PP) besonders gut eignet, um eine Kunststoff-Sinterschicht auf der Innenseite der tragenden Struktur auszubilden. Gegenüber anderen Materialien, beispielsweise gegenüber Polyethylen, bietet Polyurethan oder Polyamid oder Polypropylen im Rahmen der erfindungsgemäßen Lösung den Vorteil, dass sich besonders dünne Wandstärken realisieren lassen, die dennoch die gewünschten Anforderungen, nämlich insbesondere die erforderliche chemische Inertheit gegenüber den mitzuführenden Betriebsstoffen aufzuweisen, erfüllen. Die geringere Wandstärke ermöglicht es, dass mehr Volumen des mitzuführenden Betriebsstoffes, beispielsweise eines Harnstoffes oder einer ADBLUE-Lösung in den Behälter eingebracht werden kann.

Die Ausbildung der Kunststoff-Sinterschicht aus Polyurethan oder Polyamid oder Polypropylen hat zudem den Vorteil, dass sich im Vergleich zu anderen Kunststoffen eine Gewichtseinsparung ergibt. Dies ist insbesondere im Kraftfahrzeug- und auch im Nutzfahrzeugbereich besonders relevant.

Die Polyurethan-Sinterschicht oder die Polyamid-Sinterschicht oder die Polypropylen-Sinterschicht kann beispielsweise eine Dicke von 1 mm bis 25 mm, vorzugsweise ca. 5 mm bis 10 mm aufweisen.

Das Polyurethan kann verschiedene Eigenschaften aufweisen, die in Abhängigkeit des spezifischen Einsatzes zur Ausbildung einer Kunststoff-Sinterschicht von Vorteil sein können. Dasselbe gilt für Polyamid oder Polypropylen.

Vorteilhaft kann es beispielsweise sein, wenn das Polyurethan derart ausgestaltet ist, dass die Kunststoff-Sinterschicht aus Polyurethan an der Innenseite der tragenden Struktur anhaftet. Polyurethan kann in einfacher Weise mit der Eigenschaft "haftfähig" versehen werden. Dasselbe gilt für Polyamid oder Polypropylen. Vorzugsweise kann die tragende Struktur bzw. zumindest deren Innenseite aus Aluminium oder einer Aluminiumlegierung gebildet sein.

Bei der tragenden Struktur kann es sich vorzugsweise um eine Umfangswandung bzw. Metallhülle handeln, in der Art wie diese bei herkömmlichen Nutzfahrzeugtanks zur Aufnahme von Kraftstoffen eingesetzt werden.

In einer Ausgestaltung der erfindungsgemäßen Lösung kann ferner vorgesehen sein, dass das Polyurethan mit Verstärkungseinlagen, beispielsweise mit Fasern zur Verstärkung versehen ist. Dasselbe gilt für Polyamid oder Polypropylen.

Erfindungsgemäß kann vorgesehen sein, dass das Polyurethan oder das Polyamid oder das Polypropylen mit Kohlefasern verstärkt ist.

Insbesondere durch die Wahl der Monomerkomponenten lassen sich die Eigenschaften von Polyurethan oder Polyamid oder Polypropylen sehr stark variieren. Vorgesehen sein kann beispielsweise, dass das Polyurethan als Duroplast oder als Elastomer vorliegt. So lässt sich erreichen, dass das Polyurethan beispielsweise hart und/oder zäh ist. Genauso lässt sich erreichen, dass das Polyurethan weich bzw. flexibel ist. Dieselben Eigenschaften lassen sich auch bei Polyamid oder Polypropylen erreichen.

Polyamid und Polypropylen liegen vorzugsweise als Thermoplaste vor.

Durch die erfindungsgemäße Lösung ist es möglich, auf zusätzliche Vorrichtungen zur Fixierung der Polyurethan-Sinterschicht oder der Polyamid-Sinterschicht oder der Polypropylen-Sinterschicht an der Innenseite der tragenden Struktur zu verzichten, da bereits durch den Sinterprozess eine feste Verbindung, d. h. gegebenenfalls auch ein direktes Anhaften an der Innenseite der tragenden Struktur, erreicht wird.

Besonders vorteilhaft lässt sich ein derartiger Behälter für Betriebsstoffe von Kraftfahrzeugen, insbesondere von Nutzfahrzeugen, herstellen, indem nach dem Zusammenfügen der tragenden Struktur aus metallischen Einzelteilen, vorzugsweise aus Aluminium oder einer Aluminiumlegierung, die gesamte Struktur erhitzt wird. Dabei kann das zur Ausbildung der Kunststoff-Sinterschicht vorgesehene Polyurethan in den Innenraum der tragenden Struktur eingebracht werden. Von Vorteil ist es dabei, wenn das Polyurethan durch eine ohnehin in der tragenden Struktur vorhandene Zugangsöffnung, beispielsweise die Öffnung für einen Einfüllstutzen, eingebracht wird. Eine besonders gute Verteilung des Polyurethans und somit eine besonders gleichmäßige Ausbildung einer Kunststoff-Sinterschicht aus dem Polyurethan an der Innenseite der tragenden Struktur ergibt sich, wenn der Behälter bzw. die tragende Struktur des Behälters während dem Sinterprozess in Bewegung gesetzt wird, vorzugsweise rotiert. Dasselbe gilt für die Verwendung von Polyamid oder Polypropylen anstelle von Polyurethan.

Dadurch, dass die tragende Struktur erhitzt ist, wird das eingebrachte Polyurethan oder das Polyamid oder das Polypropylen an der Innenseite der tragenden Struktur aufgeschmelzt und bildet somit die gewünschte Kunststoff-Sinterschicht aus.

Vorgesehen sein kann dabei, dass das Polyurethan oder das Polyamid oder das Polypropylen durch die Ausbildung mit einer entsprechenden Eigenschaft an der Innenseite der tragenden Struktur anhaftet. Alternativ oder ergänzend dazu kann vor dem Einbringen des Polyurethanmaterials oder des Polyamidmaterials oder des Polypropylenmaterials auch eine Haftschicht auf die Innenseite der tragenden Struktur aufgebracht werden. Gegebenenfalls kann die Haftschicht bereits vor dem Zusammenfügen der tragenden Struktur auf den Einzelteilen aufgebracht werden.

Die tragende Struktur kann in bekannter Weise hergestellt werden, so wie dies beispielsweise zur Herstellung von herkömmlichen Kraftstofftanks für Nutzfahrzeuge der Fall ist. Im Regelfall wird dabei aus einem Blech eine rohrförmige Umfangswandung gebogen, welche an ihren beiden Stirnseiten durch Stirnwandungen verschlossen wird, die vorzugsweise mit der rohrförmigen Umfangswandung verschweißt sind.

Erfindungsgemäß ist vorgesehen, dass die tragende Struktur durch Verschweißen einzelner Metallteile, vorzugsweise aus Aluminium oder einer Aluminiumlegierung, hergestellt wird. In Frage kommt selbstverständlich auch jede andere Ausbildung aus Metall, beispielsweise aus Stahl, Edelstahl oder einer entsprechenden Legierung.

Durch die erfindungsgemäße Lösung ist es einfach möglich, integrierte Mehrfach-, insbesondere Doppelbehälter zu realisieren. Die Integration der Behälter innerhalb einer Tragstruktur hat dabei den Vorteil, dass nicht jeder Teilbehälter für sich mittels zweier oder mehrerer Konsolen am Fahrzeugrahmen befestigt werden muss, sondern dass der integrierte Behälter als Ganzes mit lediglich zwei Konsolen an einem Fahrzeugrahmen angebracht werden kann.

Als vorteilhafter Temperaturbereich zum Aufsintern der Polyurethan-Sinterschicht hat sich ein Temperaturbereich von ca. 160 bis 200 °C bewährt. Derselbe Temperaturbereich eignet sich auch für Polyamid oder Polypropylen.

Die Polyurethan-Sinterschicht bzw. die Polyamid-Sinterschicht oder die Polypropylen-Sinterschicht im Inneren des Behälters kann mechanisch beispielsweise dadurch weiter stabilisiert werden, dass der Behälter an seiner Innenseite - gegebenenfalls bedingt durch den Fertigungsprozess - eine oder mehrere Hinterschneidungen aufweist, so wie dies in der WO 2007/080078 A1 beschrieben ist.

Erfindungsgemäß kann ferner vorgesehen sein, dass ein Kraftstofftank für Nutzfahrzeuge wenigstens einen ersten Aufnahmeraum für einen Kraftstoff, beispielsweise Diesel, Biodiesel oder Benzin, aufweist und wenigstens einen zweiten Aufnahmeraum für einen weiteren Kraftstoff, einen Betriebsstoff oder eine Betriebsstoffkomponente vorgesehen ist, wobei der zweite Aufnahmeraum durch den erfindungsgemäßen Behälter gebildet ist, der mit dem Kraftstofftank zu einer Einheit zusammengesetzt bzw. zusammengefügt ist.

Der erste Aufnahmeraum, welcher zur Aufnahme eines herkömmlichen Kraftstoffs vorgesehen ist, benötigt keine Polyurethan-Sinterschicht an seiner Innenseite, daher kann dessen Herstellung in bekannter und kostengünstiger Art und Weise erfolgen. Die Verbindung mit dem Behälter, welcher den zweiten Aufnahmeraum ausbildet, kann vorzugsweise dadurch erfolgen, dass stirnseitige Enden der Umfangswandungen bzw. der tragenden Strukturen, welche den ersten bzw. den zweiten Aufnahmeraum ausbilden, miteinander verschweißt oder auf andere Art und Weise miteinander verbunden werden. Um zu vermeiden, dass durch den Verbindungsprozess die Polyurethan-Sinterschicht des Behälters wieder aufgeweicht bzw. beschädigt wird, ist vorgesehen, die stirnseitigen Enden der beiden Umfangswandungen bzw. der beiden tragenden Strukturen mit Abstand zu der Polyurethan-Sinterschicht zu verbinden. In einfacher Weise kann dabei vorgesehen sein, dass die tragende Struktur bzw. die Umfangswandung des Behälters, der den zweiten Aufnahmeraum ausbildet, eine axiale Verlängerung bzw. Auskragung aufweist, so dass die mit der Umfangswandung des ersten Aufnahmeraums zu verschweißende Stirnseite von der Polyurethan-Sinterschicht beabstandet ist. Dasselbe gilt, wenn anstelle einer Polyurethan-Sinterschicht eine Polyamid-Sinterschicht oder eine Polypropylen-Sinterschicht eingesetzt wird.

Für eine Ausführung der beiden Behälter aus Aluminium mit ca. 2 mm Wandstärke hat sich ein Abstand der Schweißnaht, welche die beiden Behälter verbindet, von ca. 150 mm zu dem Behälter, der den zweiten Aufnahmeraum ausbildet, als vorteilhaft erwiesen. Abhängig von der verwendeten Schweißtechnologie können hier auch andere Abstände gewählt werden, beispielsweise von 50 mm bis 1.000 mm.

Der Erfinder hat durch Versuche herausgefunden, dass es auch möglich ist, die beiden Aufnahmeräume bzw. die entsprechenden Behälter direkt miteinander zu verschweißen. Ein Abstand zwischen der Schweißnaht und der Kunststoff-Sinterschicht aus Polyamid, Polyurethan oder Polypropylen ist nicht notwendig.

Die Erfinder haben erkannt, dass der mit der Kunststoff-Sinterschicht ausgebildete Behälter nicht zwangsläufig eine geschlossene tragende Struktur aufweisen muss, innerhalb der die Kunststoff-Sinterschicht ausgebildet wird. Bei dem erfindungsgemäßen Verfahren zur Herstellung eines Behälters für Betriebsstoffe von Kraftfahrzeugen mit einer Tragstruktur und einem Außenboden gemäß Anspruch 14 kann vorgesehen sein, dass zunächst ein geschlossener bzw. im Wesentlichen geschlossener Innenraum durch die Tragstruktur, einen Außenboden und einen Stempel geschaffen wird. Anschließend wird eine Schutzschicht bzw. eine Kunststoff-Sinterschicht auf der Innenseite des Innenraums ausgebildet. Danach wird der Stempel entfernt. Dadurch entsteht ein Teilbehälter bzw. ein Aufnahmeraum, bei dem auf die Tragstruktur und den Außenboden eine Kunststoff-Sinterschicht aufgebracht ist und bei dem in dem Bereich, der durch den Stempel begrenzt war, eine Kunststoff-Zwischenwand geschaffen ist.

Zunächst kann in bekannter Art und Weise ein Behälter hergestellt werden, der an einer Stirnseite offen ist. Die Umfangswandung kann beispielsweise durch Biegen eines Blechs und eine entsprechende Längsnahtverschweißung hergestellt werden. Eine der offenen Stirnseiten wird anschließend mit einem Außenboden versehen, vorzugsweise verschweißt. Alternativ kann die Umfangswandung und der Außenboden auch einstückig, beispielsweise durch Ziehen, hergestellt werden.

Anschließend wird in die offene Stirnseite der Umfangswandung ein Stempel eingeführt. Alternativ kann auch ein beliebiger Gegenstand eingeführt werden, der so mit den Innenseiten der Umfangswandung abschließt, dass eine provisorische Zwischenwand gebildet wird. Der Stempel oder dergleichen kann soweit in die Umfangswandung eingeschoben werden bzw. an einer Stelle in der Umfangswandung positioniert werden, dass durch die Umfangswandung, den bereits vorhandenen Außenboden und den eingeschobenen Stempel ein Innenraum mit einem gewünschten Volumen geschaffen wird. Der Vorteil ist dabei, dass durch eine einfache Verschiebung des Stempels ein größerer oder ein kleinerer Innenraum geschaffen werden kann. Anschließend wird durch eine geeignete Öffnung das Kunststoff-Sintermaterial in den durch die Umfangswandung, den Außenboden und den Stempel geschaffenen Innenraum eingebracht. Durch das bereits beschriebene Verfahren, vorzugsweise durch ein Rotations-Sinterverfahren, wird eine Kunststoff-Sinterinnenbeschichtung in dem Innenraum geschaffen. Als Sintermaterial kann Polyurethan (PU), Polyethylen (PE), Polyamid (PA) oder Polypropylen (PP) gewählt werden.

An der Umfangswandung und dem Außenboden haftet das Kunststoff-Sintermaterial in der bereits beschriebenen Art und Weise an. Der Stempel, der während dem Sinterprozess eine Innenwand bildet, ist vorzugsweise derart gestaltet, dass an diesem die Kunststoff-Sinterschicht nicht anhaftet. Dadurch wird erreicht, dass nach Vollenden des Sinterprozesses bzw. zu einem geeigneten Zeitpunkt während des Sinterprozesses der Stempel aus der Umfangswandung ausgefahren werden kann. Dies soll derart erfolgen, dass eine Zwischenwand aus dem Kunststoff-Sintermaterial an der durch den Stempel vorgegebenen Fläche verbleibt.

Zur Fertigstellung eines Kraftstofftanks, der wenigstens zwei getrennte Aufnahmeräume aufweist, sind nunmehr zwei Varianten denkbar. Einerseits kann die offene Stirnwandung der Umfangswandung direkt mit einem Außenboden verschlossen, vorzugsweise verschweißt werden. Somit entsteht ein Aufnahmeraum, der über eine Kunststoff-Sinterinnenbeschichtung verfügt bzw. durch eine Kunststoff-Zwischenwand begrenzt ist. Der andere Aufnahmeraum wird durch den nicht mit einer Kunststoff-Sinterschicht versehenen Teil der Umfangswandung, den aufgeschweißten Außenboden und die aus dem Kunststoff-Sintermaterial hergestellte Kunststoff-Zwischenwand gebildet. Der zweite Aufnahmeraum eignet sich dabei zur Aufnahme eines herkömmlichen Kraftstoffs, vorzugsweise Diesel. Der mit der Kunststoff-Sinterinnenbeschichtung versehene erste Aufnahmeraum eignet sich zur Aufnahme eines aggressiven Mediums, vorzugsweise Harnstoff bzw. ADBLUE.

Eine zweite Alternative, um einen Kraftstofftank mit wenigstens zwei Aufnahmeräumen auszubilden, besteht darin, an die offene Stirnseite der Umfangswandung eine weitere Umfangswandung anzubringen, vorzugsweise anzuschweißen. Hierfür kann beispielsweise an der Schnittstelle eine Schwallwand, eine Trennwand oder dergleichen eingesetzt werden. Die angesetzte Umfangswandung kann dabei eine beliebige Länge und eine beliebige Anzahl von Schwall- oder Trennwänden aufweisen. Die angesetzte Umfangswandung wird abschließend mit einem Außenboden versehen, vorzugsweise verschweißt. Falls durch diese Variante mehr als zwei Aufnahmeräume ausgebildet werden sollen, muss selbstverständlich eine entsprechende Anzahl von Einlassöffnungen an geeigneten Stellen vorgesehen sein. Eine Verlängerung des Kraftstofftanks durch das Anfügen einer separaten Umfangswandung an die offene Stirnseite der Umfangswandung, die den mit der Kunststoff-Sinterschicht versehenen Innenraum beherbergt, hat den Vorteil, dass die Umfangswandung, die den Stempel zur Ausbildung einer Kunststoff-Zwischenwand aufnimmt, verhältnismäßig kurz ausgebildet sein kann. Nachdem die Kunststoff-Sinterschicht vorzugsweise durch ein Rotations-Sinterverfahren hergestellt werden soll, ist es vorteilhaft, wenn die Umfangswandung, in der die Sinterschicht ausgebildet werden soll, nur eine relativ kurze axiale Länge aufweist. Von Vorteil ist es außerdem, dass sich durch das Anfügen einer separaten Umfangswandung die Länge des Kraftstofftanks einfach verändern lässt, ohne dass das Verfahren zum Herstellen der Kunststoff-Sinterschicht angepasst werden muss.

Die Stärke der Kunststoff-Sinterschicht kann derart gewählt werden wie dies bereits bezüglich der Herstellung einer Kunststoff-Sinterschicht innerhalb eines geschlossenen Behälters beschrieben wurde.

Ein vorteilhafter Behälter für Betriebsstoffe von Kraftfahrzeugen mit einem Teilbehälter bzw. einem Aufnahmeraum ist derart gestaltet, dass der Teilbehälter bzw. der Aufnahmeraum durch eine auf die Innenseite einer Tragstruktur und einen Außenboden aufgebrachte Kunststoff-Sinterschicht sowie eine Kunststoff-Zwischenwand aus dem Kunststoff-Sintermaterial gebildet ist.

Vorteilhafte Weiterbildungen der Erfindung ergeben sich aus den abhängigen Ansprüchen. Nachfolgend ist anhand der Zeichnung ein Ausführungsbeispiel der Erfindung prinzipmäßig dargestellt.

Es zeigt:
- Fig. 1: eine perspektivische Darstellung eines Kraftstofftanks mit zwei Aufnahmeräumen;
- Fig. 2: eine perspektivische Darstellung eines Kraftstofftanks gemäß Fig. 1 mit einer prinzipmäßigen Darstellung eines Füllstandsensors und einer Heizspirale für den zweiten Aufnahmeraum;
- Fig. 3: eine perspektivische Darstellung eines Kraftstofftanks in einer zweiten Ausführungsform, mit einer teilweise geschnittenen Darstellung der tragenden Struktur für den Behälter, der den zweiten Aufnahmeraum ausbildet;
- Fig. 4: einen Schnitt durch den Behälter, der den zweiten Aufnahmeraum ausbildet;
- Fig. 5: eine Einzeldarstellung eines Behälters zur Aufnahme eines Betriebsstoffes mit einer teilweise geschnittenen Darstellung der tragenden Struktur des Behälters, wobei der Behälter eine Auskragung zur Anbindung an einen zweiten Behälter aufweist;
- Fig. 6: einen Schnitt durch einen prinzipmäßig dargestellten Behälter mit einer PolyurethanSinterschicht oder einer PolyamidSinterschicht oder einer PolypropylenSinterschicht an der Innenseite der tragenden Struktur des Behälters;
- Fig. 7a: einen Schnitt durch einen Teilbehälter, mit einer Umfangswandung und einem Außenboden, wobei in eine offene Stirnseite der Umfangswandung ein Stempel eingebracht ist, um einen geschlossenen Innenraum auszubilden;
- Fig. 7b: einen Schnitt gemäß der Fig. 7a, wobei in dem Innenraum des Teilbehälters, der durch den Stempel begrenzt ist, eine KunststoffSinterschicht ausgebildet ist; und
- Fig. 7c: eine Schnittdarstellung gemäß Fig. 7b, wobei der Stempel aus der Umfangswandung entfernt ist.

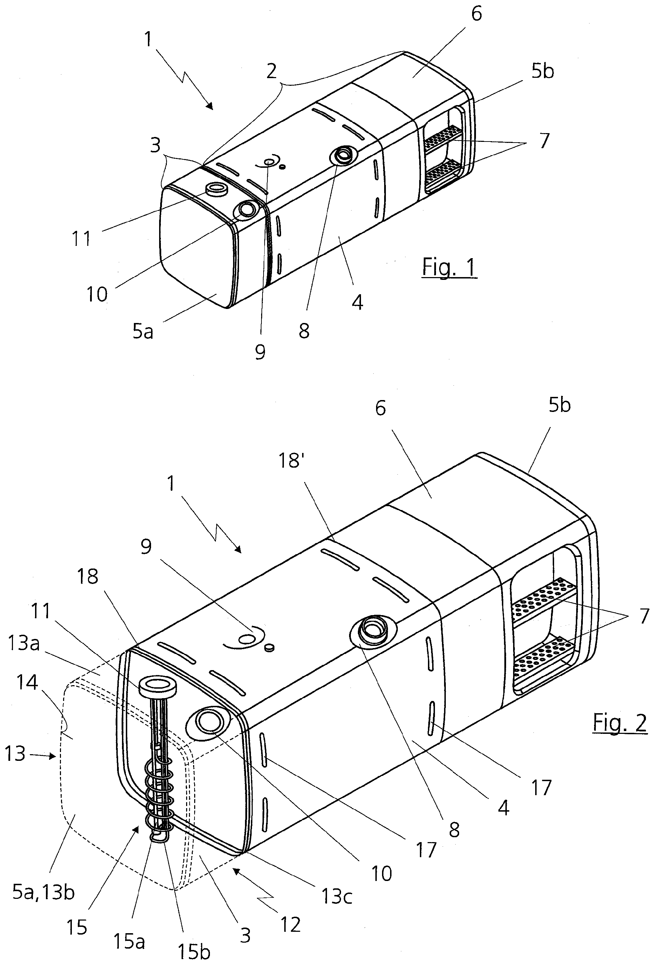

Fig. 1 zeigt einen Kraftstofftank 1, welcher einen großen Aufnahmeraum 2 zur Aufnahme eines Kraftstoffs, im Ausführungsbeispiel Diesel, und einen zweiten kleineren Aufnahmeraum 3 zur Aufnahme eines Betriebsstoffes, im Ausführungsbeispiel eines Harnstoffes oder einer ADBLUE-Lösung aufweist.

Der Kraftstofftank 1 weist im Ausführungsbeispiel insgesamt eine Umfangswandung 4 und zwei stirnseitige Enden 5a, 5b auf, die aus Aluminium bzw. einer Aluminiumlegierung ausgebildet sind. Ferner weist der Kraftstofftank 1 ein sogenanntes Trittstufenmodul 6 auf, welches mit Trittstufen 7 versehen ist.

Das Trittstufenmodul 6 stellt einen Teil des ersten Aufnahmeraums 2 zur Aufnahme des Kraftstoffs dar. In den ersten Aufnahmeraum 2 kann Kraftstoff über einen Einfüllstutzen 8 eingefüllt werden. Ferner sind Zugangsöffnungen 9 für weitere Funktionselemente, beispielsweise einen Füllstandsmesser, vorgesehen.

Analog dazu ist der zweite Aufnahmeraum 3 ebenfalls über einen Einfüllstutzen 10 mit Betriebsstoff bzw. einer Betriebsstoffkomponente befüllbar und weist des weiteren eine weitere Zugangsöffnung 11 auf, die im Ausführungsbeispiel zur Aufnahme eines Füllstandsensors 15a und eines Heizelements 153 dient (siehe Fig. 2).

Der in Fig. 1 und Fig. 2 dargestellte Kraftstofftank 1 stellt eine besonders geeignete Kombination mehrerer Merkmale dar.

Wie sich insbesondere aus Fig. 2 ergibt, ist der zweite Aufnahmeraum 3 durch einen von dem zweiten Aufnahmeraum 3 unabhängigen Behälter 12 ausgebildet. Der Behälter 12 kann grundsätzlich auch unabhängig von dem Kraftstofftank 1 bzw. von dem ersten Aufnahmeraum 2 eingesetzt werden.

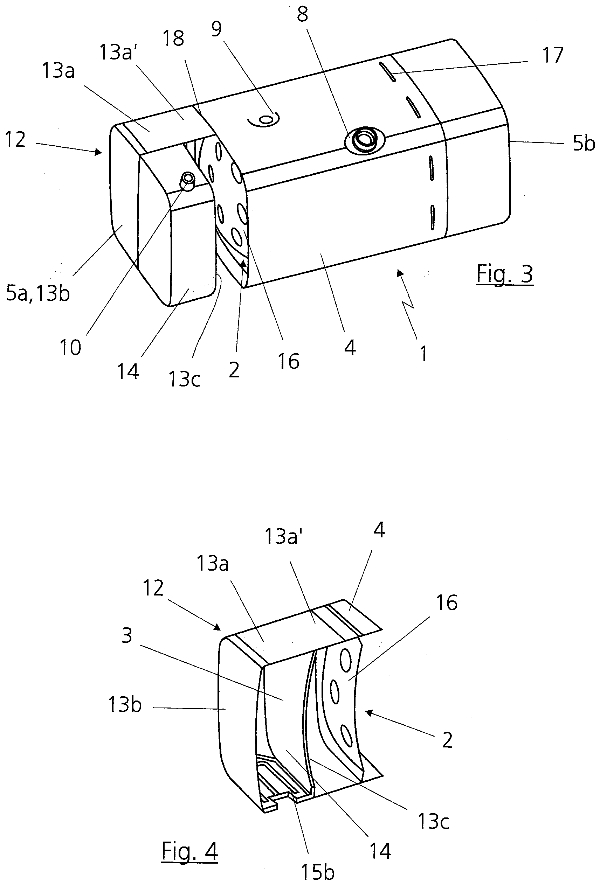

Der Behälter 12, der zur Aufnahme eines Betriebsstoffes bzw. einer Betriebsstoffkomponente dient, weist, wie sich auch aus den Figuren 3 bis 6 bezüglich der weiteren Ausführungsbeispiele ergibt, eine tragende Struktur 13 auf, an deren Innenseite eine Kunststoff-Sinterschicht 14 aus Polyurethan ausgebildet ist.

Anstelle von Polyurethan kann auch Polyamid oder Polypropylen verwendet werden. Alle im Ausführungsbeispiel beschriebenen Ausgestaltungen geltend gleichermaßen für eine Kunststoff-Sinterschicht 14, die auf Basis von Polyamid oder Polypropylen gebildet ist.

Die tragende Struktur 13 ist im Ausführungsbeispiel aus Aluminium bzw. einer Aluminiumlegierung gebildet. Grundsätzlich kann die tragende Struktur 13 auch aus jedem anderen Material, vorzugsweise einem Metall, gebildet sein, beispielsweise Stahl, Edelstahl oder einer entsprechenden Legierung dieser Metalle.

Im Ausführungsbeispiel ist die gesamte Umfangswandung 4 des Kraftstofftanks 1, und somit auch die tragende Struktur 13, aus dem gleichen Material gebildet.

Der Behälter 12 wird zunächst unabhängig von dem Kraftstofftank 1 bzw. von dem ersten Aufnahmeraum 2 hergestellt und weist eine geschlossene tragende Struktur 13 bzw. eine geschlossene Umfangswandung auf. Die Umfangswandung ist dabei gebildet durch einen hülsen- bzw. rohrförmigen Abschnitt 13a, welcher stirnseitig durch Stirnwandungen 13b bzw. 13c verschlossen ist. Der rohrförmige Abschnitt 13a bzw. die Stirnwandungen 13b und 13c können in herkömmlicher Art und Weise, so wie dies zur Ausbildung von Nutzfahrzeugtanks zur Aufnahme von herkömmlichem Kraftstoff vorgesehen ist, gebildet sein. Die Stirnwandungen 13b und 13c sind vorzugsweise durch Schweißen mit dem rohrförmigen Abschnitt 13a verbunden. In dem Zustand, in dem der Behälter 12 mit der Umfangswandung 4 zur Ausbildung eines gemeinsamen Kraftstofftanks 1 verbunden ist, so wie dies in den Figuren 1 und 2 dargestellt ist, stellt die Stirnwandung 13b die Stirnwandung 5a des Kraftstofftanks 1 dar.

In besonders vorteilhafter Weise lässt sich die Kunststoff-Sinterschicht 14 aus dem Polyurethan an der Innenseite der tragenden Struktur 13 anbringen bzw. befestigen, wenn das Polyurethan durch eine der Öffnungen 10, 11 in die tragende Struktur 13 eingebracht wird. Vorgesehen ist dabei, dass der Behälter 12 bzw. die tragende Struktur 13 erhitzt wird, so dass das Polyurethan, welches sich an der Innenseite der Tragstruktur niederschlägt, aufschmilzt und somit die gewünschte Polyurethan-Sinterschicht ausgebildet wird.

Im Ausführungsbeispiel ist gemäß der in den Figuren 1 und 2 dargestellten Ausführungsform vorgesehen, dass in die weitere Öffnung 11 ein kombiniertes Funktionselement 15 eingesetzt wird, welches sowohl die Funktion eines Füllstandsensors 15a erfüllt als auch die Funktion eines Heizelements 15b.

In der in den Figuren 1 und 2 dargestellten Ausführungsform ist vorgesehen, dass der Behälter 12 bzw. dessein Stirnwandung 13c den ersten Aufnahmeraum 2 stirnseitig begrenzt. Somit kann auf eine eigene Stirnwandung für den ersten Aufnahmeraum 2 verzichtet werden. In einer alternativen Ausführungsform kann selbstverständlich auch vorgesehen sein, dass der erste Aufnahmeraum 2 über eigene stirnseitige Endwände verfügt, dies reduziert jedoch den für die Aufnahme von Kraftstoff bzw. Betriebsstoff zur Verfügung stehenden Aufnahmeraum und ist daher weniger geeignet.

In der in den Figuren 1 und 2 dargestellten Ausführungsform ist der erste Aufnahmeraum 2 mit zwei eingesickten Schwallwänden 16 versehen. In der Darstellung gemäß Fig. 1 und Fig. 2 sind von den Schwallwänden 16 nur die umlaufenden Sicken 17 zu erkennen.

In der Ausführungsform gemäß den Figuren 1 und 2 ist der Behälter 12 im Bereich seiner Stirnwandung 13c mittels einer Schweißnaht 18 unmittelbar an die offene Stirnseite des Teiles der Umfangswandung 4, welche den ersten Aufnahmeraum 2 ausbildet, angeschweißt. Gegebenenfalls kann vorgesehen sein, dass der rohrförmige Abschnitt 13a einen kleinen Überstand aufweist.

Im Unterschied dazu ist gemäß der in Fig. 3 dargestellten Ausführungsform vorgesehen, dass der rohrförmige Abschnitt 13a eine Auskragung 13a' bzw. eine rohrförmige Verlängerung aufweist, so dass die Schweißnaht 18, welche den rohrförmige Abschnitt 13a mit der offenen Stirnseite der Umfangswandung 4 verbindet, so weit von der Polyurethan-Sinterschicht 14 entfernt ist, dass diese durch die Wärmeeinwirkung beim Schweißen nicht beeinträchtigt wird bzw. nicht aufschmilzt.

Wie sich aus der Fig. 3 und Fig. 4 ergibt, stellt die Auskragung 13a' bzw. die Verlängerung des rohrförmigen Abschnitts 13a, einen Teil des ersten Aufnahmeraums 2 dar, der mit dem Hauptbereich des ersten Aufnahmeraums 2 über die Löcher in der Schwallwand 16 verbunden ist. Gegebenenfalls kann die Schwallwand 16 auch entfallen, diese erhöht jedoch die Stabilität des Kraftstofftanks 1.

In der Ausführungsform gemäß den Figuren 3 und 4 sind zwei Schwallwände 16 vorgesehen, wobei von der zweiten Schwallwand 16 nur die außenseitig umlaufenden Sicken 17, die zu dessen Verbindung mit der Umfangswandung 4 dienen, dargestellt sind.

In der Ausführungsform gemäß den Figuren 3 und 4 dient die Seitenwandung 13b des Behälters 12 zur stirnseitigen Begrenzung des ersten Aufnahmeraums 2, so dass eine eigene stirnseitige Begrenzung des Aufnahmeraums 2 an diesem Ende des Aufnahmeraums 2 nicht erforderlich ist.

In Fig. 4 ist das Heizelement 15b in einer alternativen Ausführungsform dargestellt.

In Fig. 4 ist ferner vorgesehen, dass die Stirnwandung 13c eine konkave Form aufweist. Alternativ kann auch vorgesehen sein, dass die beiden stirnseitigen Enden der tragenden Struktur 13 des Behälters 12 gemeinsam eine bikonkave Form aufweisen. Dadurch ergibt sich eine besonders starke Form.

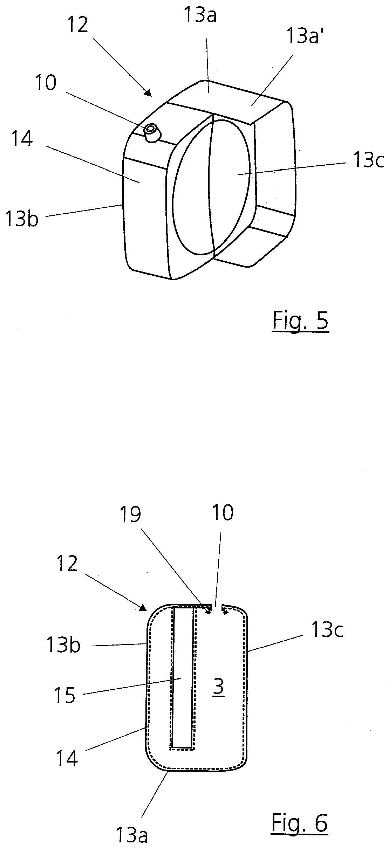

Die tragende Struktur 13 des Behälters 12 kann mit Hinterschneidungen 19 versehen sein, beispielsweise im Bereich der Öffnungen 10, 11, so dass die Polyurethan-Sinterschicht 14 besonders gut angebunden wird (siehe Fig. 6). Dies ist grundsätzlich in der WO 2007/080078 A1 beschrieben.

In Fig. 5 ist der Behälter 12 in einer Einzeldarstellung gezeigt. Grundsätzlich kann der Behälter 12 auch eingesetzt werden, ohne dass dieser mit einem weiteren Aufnahmeraum zu einem gemeinsamen Kraftstofftank 1 zusammengefügt ist. Der in Fig. 5 dargestellte Behälter 12 weist jedoch eine verlängerte rohrförmige Umfangswandung 13a auf, so dass eine Anbindung an einen beliebigen zweiten Behälter, bei dem es sich nicht zwangsläufig um einen Kraftstofftank oder einen Behälter zur Aufnahme von Kraftstoff handeln muss, einfach möglich ist. Insofern keine Anbindung an einen weiteren Behälter vorgesehen ist, kann auf die Verlängerung 13a' verzichtet werden, so dass die tragende Struktur 13 lediglich aus einer rohrförmigen Umfangswandung 13a besteht, die an deren stirnseitigen Enden von Stirnwandungen 13b und 13c verschlossen ist.

In Fig. 6 ist prinzipmäßig ein Schnitt durch einen Behälter 12 dargestellt. Dabei ist die Innenseite der tragenden Struktur 13 vollständig, bzw. im wesentlichen vollständig, mit der Polyurethanschicht bedeckt/versehen bzw. abgedeckt. Im Innenraum des Behälters 12 ist ferner ein Funktionselement 15 angeordnet, welches ebenfalls mit der Polyurethanschicht versehen ist.

Grundsätzlich ist die Herstellung des Behälters 12 in beliebiger Art und Weise möglich. Vorgesehen sein kann beispielsweise auch, dass wenigstens eine Stirnwandung mit dem rohrförmigen Umfangswandungsteil einstückig ausgebildet ist, beispielsweise durch einen entsprechenden Umformprozess. Erfindungsgemäß wesentlich ist es, die tragende Struktur 13 mit einer Polyurethan-Sinterschicht 14 oder einer Polyamid-Sinterschicht oder einer Polypropylen-Sinterschicht zu versehen, so dass chemisch aggressive Medien, insbesondere Betriebsstoffe und Betriebsstoffkomponenten für Nutzfahrzeuge aufgenommen werden können.

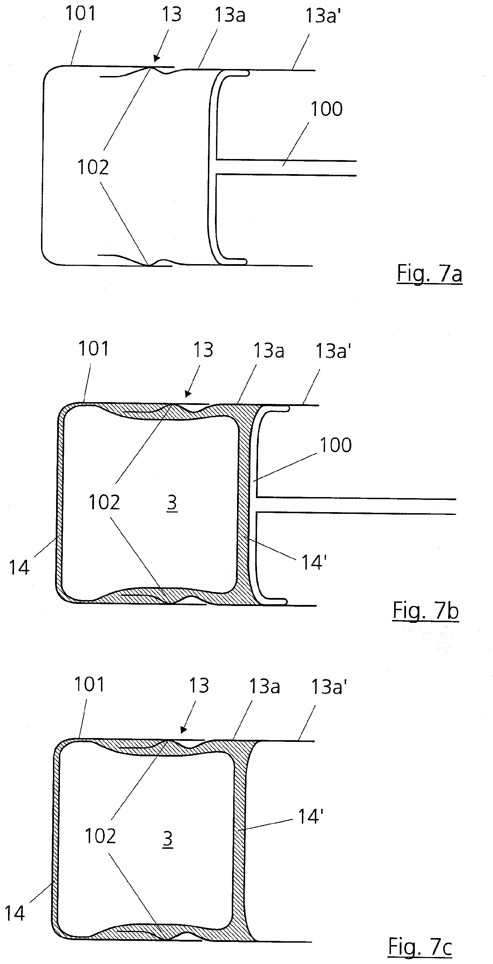

Die Figuren 7a bis 7c zeigen eine weitere Variante der Erfindung, bei der der Teilbehälter bzw. der Aufnahmeraum 3 zur Aufnahme eines Betriebsstoffs, im Ausführungsbeispiel eines Harnstoffs oder einer ADBLUE-Lösung, nach einem alternativen Verfahren hergestellt wird. In Fig. 7a ist der erfindungsgemäße Behälter im Querschnitt zum Beginn des Fertigungsprozesses dargestellt. Fig. 7a zeigt die Tragstruktur 13, die seitlich offen ausgeführt ist; dabei ist durch die seitliche Öffnung der Tragstruktur 13 der Stempel 100 eingeführt, so dass durch die Tragstruktur 13, den Stempel 100 und den Außenboden 101 ein abgeschlossener Raum gebildet wird. Der Außenboden 101 ist dabei auf die Tragstruktur 13 aufgesteckt; zur Erleichterung des Aufsteckens ist die Tragstruktur 13 in dem mit dem Au-ßenboden 101 überlappenden Bereich mit einer Rollierung 102 versehen, die das Aufstecken des Außenbodens 101 auf die Tragstruktur 13 dadurch erleichtert, dass durch die Rollierung 102 eine Verjüngung gebildet wird. In einem nachfolgenden Verfahrensschritt wird auf die Innenseite des Außenbodens 101 und der Tragstruktur 13 sowie auf die dem Innenraum zugewandte Seite des Stempels 100 die Schutzschicht bzw. Kunststoff-Sinterschicht 14 aufgebracht. Dies kann durch einen Sintervorgang, beispielsweise Rotationssintern, erfolgen. Durch den Beschichtungsvorgang bildet sich der in Fig. 7b dargestellte Teilbehälter bzw. der Aufnahmeraum 3, die Rollierung 102 hat dabei den positiven Nebeneffekt, dass durch diese eine zusätzliche Hinterschneidung zwischen der Rollierung und dem Au-ßenboden 101 geschaffen wird, wodurch die mechanische Stabilität der Schutzschicht 14 verbessert wird. Selbstverständlich ist der Gedanke, den erfindungsgemäßen Behälter aus der mit der Rollierung 102 versehenen Tragstruktur und dem Außenboden 101 herzustellen, nicht auf das in Fig. 7 dargestellte Ausführungsbeispiel beschränkt. Gleiches gilt für die Verwendung des Stempels 100. Nach dem Entfernen des Stempels 100 aus dem inneren Bereich der Tragstruktur 13 ist der in Figur 7c dargestellte Teilbehälter bzw. der Aufnahmeraum 3 entstanden, der im wesentlichen aus den mit der Schutzschicht 14 versehenen Komponenten Außenboden 101 und Tragstruktur 1 sowie aus der Kunststoffwand 14' besteht. Die Verwendung des Stempels 100 und die Ausbildung der Kunststoffwand 14' hat dabei den positiven Effekt, dass auf eine zusätzliche metallische Trennwand verzichtet werden kann.

Zur Fertigstellung des Behälters kann die seitliche Öffnung der Tragstruktur nach dem Entfernen des Stempels 100 verschlossen werden. Die Kunststoffwand 14' kann im Vergleich zur Schutzschicht 14 mit einer erhöhten Dicke ausgebildet werden, um die mechanische Stabilität dieses als Kunststoffwand 14' ausgebildeten Teils der Schutzschicht 14 zu erhöhen. Im Falle eines Rotationssinterprozesses kann dies beispielsweise dadurch erreicht werden, dass der Behälter während des Sinterns und Rotierens so gelagert wird, dass sich der Stempel 100 vorzugsweise im unteren Bereich der Anordnung befindet, so dass sich dort vermehrt Kunststoffpartikel niederschlagen. Um das Entformen des Stempels 100 zu erleichtern, kann dieser mit einer Antihaftschicht, beispielsweise aus Teflon, versehen werden.

Die Schutzschicht 14 kann in dem in Fig. 7 gezeigten Ausführungsbeispiel wie auch in allen anderen Ausführungsbeispielen und möglichen Varianten der Erfindung durch eine Kunststoff-Sinterschicht oder auch eine selbsthärtende Innenbeschichtung, wie beispielsweise einen Lack, gebildet werden. Daneben ist es denkbar, die Schutzschicht 14 aus einem mehrkomponentigen, insbesondere einem zweikomponentigen Kunststoffmaterial, wie beispielsweise einem Expoxidharz, oder einem extern aushärtbaren Material, wie beispielsweise einem UV-aushärtbaren Kunststoff oder einem durch Wärme aushärtbaren Kunststoff zu gestalten.

Die in den Figuren 7a bis 7c dargestellte erfindungsgemäße Ausbildung eines Behälters 12 bzw. eines Aufnahmeraums 3 zur Aufnahme eines chemisch aggressiven Mediums, beispielsweise eines Harnstoffs oder einer ADBLUE-Lösung, kann unabhängig von dem Sintermaterial eingesetzt werden, besonders eignet sich diese Lösung für ein Sintermaterial, das aus Polyurethan, Polyamid, Polypropylen oder Polyethylen besteht.

Der in den Figuren 7a bis 7c über den Aufnahmeraum 3 überstehende Teil der Umfangswandung 13 ist analog zu den Figuren 3 bis 5 des Ausführungsbeispiels mit einer Auskragung 13a' versehen, die bereits einen Teil des Aufnahmeraums 2 ausbildet, indem vorzugsweise ein Kraftstoff, im Ausführungsbeispiel Diesel, eingebracht werden kann.

In üblicher Weise können alle unabhängigen Aufnahmeräume 2,3 mit den notwendigen Einlass- und Auslassöffnungen (in Fig. 7a bis 7c nicht dargestellt) versehen sein.

Selbstverständlich kann die Ausbildung der tragenden Struktur 13 gemäß der in den Figuren 7a bis 7c dargestellten Ausführungsform auch dadurch hergestellt werden, dass eine Umfangswandung 13a mit dem Außenboden 101 durch Schweißen verbunden wird. Das offene Ende der Umfangswandung 13a dient dann analog dazu, den Stempel 100 einzubringen, so dass ein geschlossener Innenraum ausgebildet wird, in dem die Schutzschicht 14 bzw. die Kunststoff-Sinterschicht aufgebracht werden kann. Weiterhin kann alternativ auch vorgesehen sein, dass die tragende Struktur 13 aus einer einstückig mit einem Boden versehenen Hülse hergestellt wird, das heißt die Umfangswandung 13a und der Boden 101 werden einstückig, beispielsweise durch Ziehen, hergestellt.

## Patentansprüche

1. Behälter für Betriebsstoffe von Kraftfahrzeugen, mit einer tragenden Struktur (13), an deren Innenseite zur Ausbildung eines Aufnahmeraums (3) für den Betriebsstoff eine Kunststoff-Sinterschicht (14) ausgebildet ist,
**dadurch gekennzeichnet, dass**
die Kunststoff-Sinterschicht (14) aus einem Polyurethan oder einem Polyamid oder einem Polypropylen gebildet ist, wobei der Behälter (12) ein Einschubelement (15a, 15b) aufweist, das sich durch die tragende Struktur (13) hindurch in den Innenraum des Behälters (12) erstreckt, wobei das Einschubelement (15a, 15b) mindestens teilweise von der Kunststoff-Sinterschicht (14) aus Polyurethan oder aus Polyamid oder aus Polypropylen bedeckt ist.

2. Behälter nach Anspruch 1,
**dadurch gekennzeichnet, dass**
die Kunststoff-Sinterschicht (14) aus Polyurethan oder aus Polyamid oder aus Polypropylen an der Innenseite der tragenden Struktur (13) anhaftet.

3. Behälter nach Anspruch 1 oder 2,
**dadurch gekennzeichnet, dass**
das Polyurethan oder das Polyamid oder das Polypropylen durch Verstärkungseinlagen, vorzugsweise Kohlefasern, verstärkt ist.

4. Behälter nach Anspruch 1, 2 oder 3,
**dadurch gekennzeichnet, dass**
die tragende Struktur (13) aus Aluminium oder einer Aluminiumlegierung gebildet ist.

5. Behälter nach einem der Ansprüche 1 bis 4,
**dadurch gekennzeichnet, dass**
das Polyurethan oder das Polyamid oder das Polypropylen haftfähig ausgebildet ist.

6. Behälter nach einem der Ansprüche 1 bis 5,
**dadurch gekennzeichnet, dass**
die Innenseite der tragenden Struktur (13) mindestens eine Hinterschneidung (19) aufweist.

7. Behälter nach einem der Ansprüche 1 bis 6,
**dadurch gekennzeichnet, dass**
der Behälter (12) als Teilbehälter (3) eines Mehrfachbehälters (1) ausgebildet ist, wobei der Teilbehälter (3) dadurch gebildet ist, dass die Kunststoff-Sinterschicht (14) auf die Innenseite der tragenden Struktur (13) und einen Außenboden (101) aufgebracht sowie eine Kunststoffzwischenwand (14') aus der Kunststoff-Sinterschicht (14) gebildet ist.

8. Kraftstofftank für Kraftfahrzeuge, insbesondere Nutzfahrzeuge, mit wenigstens einem ersten Aufnahmeraum (2) für einen Kraftstoff und einen zweiten Aufnahmeraum (3) für einen zweiten Kraftstoff oder einen Betriebsstoff oder eine Betriebsstoffkomponente,
**dadurch gekennzeichnet, dass**
der zweite Aufnahmeraum (3) durch einen Behälter (12) nach einem der Ansprüche 1 bis 6 gebildet ist, wobei der Behälter (12) mit dem ersten Aufnahmeraum (2) zu einer Einheit verbunden ist.

9. Kraftstofftank nach Anspruch 8,
**dadurch gekennzeichnet, dass**
der Behälter (12) mit dem ersten Aufnahmeraum (2) verschweißt ist.

10. Kraftstofftank nach einem der Ansprüche 8 oder 9,
**dadurch gekennzeichnet, dass** wenigstens eine Stirnwandung bzw. ein stirnseitiges Ende (13b,13c) der tragenden Struktur (13) des Behälters (12) eine konkave Form aufweist.

11. Kraftstofftank nach Anspruch 10,
**dadurch gekennzeichnet, dass**
die beiden stirnseitigen Enden (13b,13c) der tragenden Struktur (13) des Behälters (12) gemeinsam eine bikonkave Form aufweisen.

12. Verfahren zu Herstellung eines Behälters für Betriebsstoffe von Kraftfahrzeugen, insbesondere von Nutzfahrzeugen mit einer tragenden Struktur (13), die einen im wesentlichen geschlossenen Innenraum ausbildet, wonach die tragende Struktur (13) erhitzt und ein Polyurethan oder ein Polyamid oder ein Polypropylen in den Innenraum der tragenden Struktur (13) eingebracht wird um eine Kunststoff-Sinterschicht (14) an der Innenseite der tragenden Struktur (13) auszubilden, wobei der Behälter (12) ein Einschubelement (15a, 15b) aufweist, das sich durch die tragende Struktur (13) hindurch in den Innenraum des Behälters (12) erstreckt, wobei das Einschubelement (15a, 15b) mindestens teilweise von der Kunststoff-Sinterschicht (14) aus Polyurethan oder aus Polyamid oder aus Polypropylen bedeckt wird.

13. Verfahren nach Anspruch 12,
**dadurch gekennzeichnet, dass**
der Behälter (12) während des Sinterprozesses in Bewegung versetzt ist, vorzugsweise eine Rotationsbewegung ausführt.

## Claims

1. Container for operating substances of motor vehicles, having a supporting structure (13) on the inside of which is formed a sintered synthetic layer (14) to form a receiving space (3) for the operating substance,
**characterized in that**
the sintered synthetic layer (14) is formed from a polyurethane or a polyamide or a polypropylene, wherein the container (12) has an insert element (15a, 15b) that extends through the supporting structure (13) and into the interior of the container (12), wherein the insert element (15a, 15b) is at least partially covered by the sintered synthetic layer (14) made of polyurethane or polyamide or polypropylene.

2. Container according to Claim 1,
**characterized in that**
the sintered synthetic layer (14) made of polyurethane or polyamide or polypropylene adheres to the inside of the supporting structure (13).

3. Container according to Claim 1 or 2,
**characterized in that**
the polyurethane or the polyamide or the polypropylene is reinforced with reinforcing inserts, preferably carbon fibres.

4. Container according to Claim 1, 2 or 3,
**characterized in that**
the supporting structure (13) is made of aluminium or an aluminium alloy.

5. Container according to one of Claims 1 to 4,
**characterized in that**
the polyurethane or the polyamide or the polypropylene is adhesive.

6. Container according to one of Claims 1 to 5,
**characterized in that**
the inside of the supporting structure (13) has at least one undercut (19).

7. Container according to one of Claims 1 to 6,
**characterized in that**
the container (12) is designed as a part container (3) of a multi-compartment container (1), wherein the part container (3) is formed by the sintered synthetic layer (14) being applied to the inside of the supporting structure (13) and an external base (101) and a synthetic partition wall (14') being formed from the sintered synthetic layer (14).

8. Fuel tank for motor vehicles, in particular utility vehicles, having at least one first receiving space (2) for a fuel and a second receiving space (3) for a second fuel or an operating substance or an operating substance component,
**characterized in that**
the second receiving space (3) consists of a container (12) according to one of Claims 1 to 6, the container (12) being connected to the first receiving space (2) so as to form one unit.

9. Fuel tank according to Claim 8,
**characterized in that**
the container (12) is welded to the first receiving space (2).

10. Fuel tank according to either of Claims 8 and 9,
**characterized in that**
at least an end wall or an end (13b, 13c) of the supporting structure (13) of the container (12) is concave.

11. Fuel tank according to Claim 10,
**characterized in that**
both ends (13b, 13c) of the supporting structure (13) of the container (12) together have a biconcave shape.

12. Method for producing a container for operating substances of motor vehicles, in particular of utility vehicles, having a supporting structure (13) that forms an essentially closed interior, after which the supporting structure (13) is heated and a polyurethane or a polyamide or a polypropylene is introduced into the interior of the supporting structure (13) in order to form a sintered synthetic layer (14) on the inside of the supporting structure (13), wherein the container (12) has an insert element (15a, 15b) that extends through the supporting structure (13) into the interior of the container (12), wherein the insert element (15a, 15b) is at least partially covered by the sintered synthetic layer (14) made of polyurethane or polyamide or polypropylene.

13. Method according to Claim 12,
**characterized in that**
the container (12) is moved during the sintering process, preferably in rotation.

## Revendications

1. Récipient pour carburants de moteurs de véhicules automobiles, avec une structure (13) porteuse sur le côté intérieur de laquelle une couche frittée en matière plastique (14) est constituée pour la formation d'un espace de réception (3) pour le carburant de moteur,
**caractérisé en ce que** la couche frittée en matière plastique (14) est formée d'un polyuréthane ou d'un polyamide ou d'un polypropylène, le récipient (12) présentant un élément d'insertion (15a, 15b) qui s'étend à travers la structure (13) porteuse dans l'espace intérieur du récipient (12), l'élément d'insertion (15a, 15b) étant couvert au moins partiellement par la couche frittée en matière plastique (14) en polyuréthane ou en polyamide ou en polypropylène.

2. Récipient selon la revendication 1,
**caractérisé en ce que** la couche frittée en matière plastique (14) en polyuréthane ou en polyamide ou en polypropylène adhère sur le côté intérieur de la structure (13) porteuse.

3. Récipient selon la revendication 1 ou 2,
**caractérisé en ce que**
le polyuréthane ou le polyamide ou le polypropylène est renforcé par des inserts de renforcement, de préférence des fibres de carbone.

4. Récipient selon la revendication 1, 2 ou 3,
**caractérisé en ce que** la structure (13) porteuse est formée en aluminium ou en alliage d'aluminium.

5. Récipient selon l'une des revendications 1 à 4,
**caractérisé en ce que** le polyuréthane ou le polyamide ou le polypropylène est constitué de façon adhésive.

6. Récipient selon l'une des revendications 1 à 5,
**caractérisé en ce que** le côté intérieur de la structure (13) porteuse présente au moins une contre-dépouille (19) .

7. Récipient selon l'une des revendications 1 à 6,
**caractérisé en ce que** le récipient (12) est constitué en tant que récipient partiel (3) d'un récipient multiple (1), le récipient partiel (3) étant formé par le fait que la couche frittée en matière plastique (14) est appliquée sur le côté intérieur de la structure (13) porteuse et sur un fond extérieur (101), de même qu'une paroi intermédiaire en matière plastique (14') est formée à partir de la couche frittée en matière plastique (14).

8. Réservoir de carburant pour des véhicules, en particulier pour des véhicules utilitaires, avec au moins un premier espace de réception (2) pour un carburant et un deuxième espace de réception (3) pour un deuxième carburant ou un carburant de moteur ou un composant de carburant de moteur,
**caractérisé en ce que** le deuxième espace de réception (3) est formé par un récipient (12) selon l'une des revendications 1 à 6, le récipient (12) étant raccordé au premier espace de réception (2) pour former une unité.

9. Réservoir de carburant selon la revendication 8,
**caractérisé en ce que** le récipient (12) est soudé avec le premier espace de réception (2).

10. Réservoir de carburant selon l'une des revendications 8 ou 9,
**caractérisé en ce qu'**au moins une paroi frontale ou respectivement une extrémité (13b, 13c) côté frontal de la structure (13) porteuse du récipient (12) présente une forme concave.

11. Réservoir de carburant selon la revendication 10,
**caractérisé en ce que** les deux extrémités (13b, 13c) côté frontal de la structure (13) porteuse du récipient (12) présentent conjointement une forme biconcave.

12. Procédé de fabrication d'un récipient pour carburants de moteur de véhicules automobiles, en particulier de véhicules utilitaires, avec une structure (13) porteuse qui constitue un espace intérieur essentiellement fermé, selon lequel la structure (13) porteuse est chauffée, et un polyuréthane ou un polyamide ou un polypropylène est mis en place dans l'espace intérieur de la structure (13) porteuse pour constituer une couche frittée en matière plastique (14) sur le côté intérieur de la structure (13) porteuse, le récipient (12) présentant un élément d'insertion (15a, 15b) qui s'étend à travers la structure (13) porteuse dans l'espace intérieur du récipient (12), l'élément d'insertion (15a, 15b) étant couvert au moins partiellement par la couche frittée en matière plastique (14) en polyuréthane ou en polyamide ou en polypropylène.

13. Procédé selon la revendication 12,
**caractérisé en ce que**
le récipient (12) est mis en mouvement pendant le processus de frittage, de préférence en mouvement de rotation.
